(19) Europäisches Patentamt
European Patent Office
Office européen des brevets

(11) Veröffentlichungsnummer: **0 317 967 B1**

(12) # EUROPÄISCHE PATENTSCHRIFT

(45) Veröffentlichungstag der Patentschrift: **22.06.94**

(51) Int. Cl.⁵: **G01B 5/00**

(21) Anmeldenummer: **88119456.7**

(22) Anmeldetag: **23.11.88**

(54) **Dreh-Schwenk-Einrichtung für Tastköpfe von Koordinatenmessgeräten.**

(30) Priorität: **26.11.87 DE 3740070**

(43) Veröffentlichungstag der Anmeldung:
**31.05.89 Patentblatt 89/22**

(45) Bekanntmachung des Hinweises auf die
Patenterteilung:
**22.06.94 Patentblatt 94/25**

(84) Benannte Vertragsstaaten:
**DE FR GB SE**

(56) Entgegenhaltungen:
**DE-A- 2 804 398**
**DE-A- 3 322 714**

**PROSPEKT DER FIRMA RENISHAW METRO-
LOGY LTD: "3 Dimensional Probes for Coordinate Measuring Machines", Wotton-un-
der-Edge, GB; Druckvermerk: BBM 1984, 8m
586, Part No. H/1000/3001**

(73) Patentinhaber: **Firma Carl Zeiss**

**D-73446 Oberkochen(DE)**
(84) Benannte Vertragsstaaten:
**DE FR SE**

(73) Patentinhaber: **CARL ZEISS-STIFTUNG HAN-**

**DELND ALS CARL ZEISS**

**D-89518 Heidenheim (Brenz)(DE)**
(84) Benannte Vertragsstaaten:
**GB**

(72) Erfinder: **Enderle, Eckhard**
**Hüttlinger Strasse 33**
**D-7080 Aalen(DE)**
Erfinder: **Andrzejewski, Thomas**
**Schellingstrasse 25**
**D-7080 Aalen(DE)**
Erfinder: **Kaufmann, Dieter**
**Schupfestrasse 6**
**D-7920 Heidenheim 5(DE)**
Erfinder: **Müller, Helmut**
**Am Holzbrunnen 11a**
**D-7070 Schwäbisch
Gmünd-Grossdeinbach(DE)**

**Beschreibung**

Die Erfindung betrifft eine Dreh-Schwenk-Einrichtung für Tastköpfe von Koordinatenmeßgeräten mit mindestens zwei motorisch verstellbaren Drehachsen sowie Verfahren zur Koordinatenvermessung von Werkstücken mit Hilfe einer solchen Dreh-Schwenk-Einrichtung.

Dreh-Schwenk-Einrichtungen des eingangs gennanten Typs dienen in erster Linie dazu, den für die Koordinatenvermessung von Werkstücken benutzten Tastkopf winkelmäßig so auszurichten, daß er für die gewünschte Meßaufgabe optimal eingesetzt werden kann.

Da die Stellungen, in die der Tastkopf im Zuge eines Meßablaufes verschwenkt wird, mit hoher Genauigkeit reproduzierbar sein müssen, ist das Dreh-Schwenk-Lager bei den bekannten Dreh-Schwenk-Einrichtungen als Raste ausgebildet. Die Lage der Tastkugeln des angesetzten Tastkopfes werden in allen Raststellungen der Dreh-Schwenk-Einrichtung einmal kalibriert. Danach kann der Tastkopf im Zuge des Meßablaufes in die verschiedenen, in der Regel ca. 7,5° C. voneinander verschiedenen Winkelstellungen gebracht werden, ohne daß ein Nachkalibrieren der Tastkugel erforderlich ist.

Dreh-Schwenk-Einrichtungen des vorstehend beschriebenen Typs sind beispielsweise aus der DE-C-28 04 398, der dazu korrespondierenden US-A-43 13 263 und US-A-45 71 847 sowie aus folgenden Firmenschriften bekannt:

1. "Three-Dimensional-Probes for Coordinate Measuring Machines" der Fa. Renishaw Plc, Großbritannien, Druckvermerk BMM 1984, 8M 586.

2. Produktinformation "Handachse" der Fa. Stiefelmaier in Esslingen, Druckvermerk 27 04 87-000970.

Der Vorteil der bekannten Dreh-Schwenk-Einrichtungen ist, daß keine präzisen Lager benötigt werden, da die Rasten die Taststiftposition bestimmen. Außerdem sind keine Positionsmeßsysteme für die Gelenkstellungen erforderlich. Nachteilig ist hingegen der Umstand, daß man bei Verwendung dieser bekannten Dreh-Schwenk-Einrichtungen auf bestimmte Winkelstellungen des Tastkopfs festgelegt ist. Aktive Antastbewegungen oder ein Nachführen des Schwenkwinkels an die Objektgeometrie beim Scannen sind deshalb mit diesen Dreh-Schwenk-Einrichtungen nicht möglich. Außerdem ist ein Kalibriervorgang für jede Winkelstellung und jeden Taster notwendig.

Aus der DE-C-33 22 714 ist es bekannt, einen optischen Tastkopf im Zuge der Abtastbewegung entlang des Werkstückes über ein Dreh-Schwenk-Gelenk der Objektgeometrie nachzuführen. Zur Messung des Schwenkwinkels sollen Winkelschrittgeber in den beiden Achsen des Dreh-Schwenk-Gelenkes vorgesehen sein. Aus der genannten Schrift geht jedoch nicht hervor, auf welche Weise die Koordinaten der Objektpunkte aus den Linearmaßstäben des Koordinatenmeßgerätes und den Winkelschrittgebern des Dreh-Schwenk-Gelenkesermittelt werden.

Es ist die Aufgabe der vorliegenden Erfindung eine Dreh-Schwenk-Einrichtung für Tastköpfe von Koordinatenmeßgeräten zu schaffen, die ohne Einbuße an Meßgenauigkeit ein stufenloses Einstellen der Dreh- bzw. Schwenkwinkel ermöglicht und in den Bewegungsablauf des Koordinatenmeßgerätes einbezogen werden kann.

Diese Aufgabe wird durch die im Kennzeichen des Patentanspruches 1 angegebenen Merkmale gelöst.

Durch diese Merkmale ist es möglich nach Meßverfahren zu arbeiten, bei denen die Koordinaten für die Vermessung von Werkstücken zumindest teilweise bei stillgesetzten Linearantrieben des Koordinatenmeßgerätes allein durch eine Bewegung des Tastkopfes mit Hilfe der Dreh-Schwenk-Einrichtung erfolgt.

Da bei dieser Betriebsweise die relativ großen Massen der verschiebbaren Schlitten des Koordinatenmeßgerätes nicht bewegt werden müssen, läßt sich für viele Meßaufgaben eine Verkürzung der Meßzeit bzw. eine Erhöhung der Meßgenauigkeit erzielen.

Beispielsweise können zylindrische Flächen (Bohrungen etc.) bei der Formprüfung mit einer der beiden Achsen der Dreh-Schwenk-Einrichtung angetastet und mit der anderen Achse ausgespindelt werden. Weiterhin ist es möglich, die zu vermessenden Punkte an einem Werkstück durch simultane Bewegung der beiden Achsen aktiv anzutasten, während die Antriebe des Koordinatenmeßgerätes stillgesetzt sind.

Bei vertretbarem Aufwand für die Herstellung der Lager und der Winkelencoder der Dreh-Schwenk-Einrichtung können Meßfehler dadurch entstehen, daß beispielsweise die beiden Achsen der Dreh-Schwenk-Einrichtung nicht exakt senkrecht zueinander verlaufen und/oder nicht genau in einer Ebene liegen, sondern mit geringem Abstand aneinander vorbeilaufen oder sonstige Laufabweichungen besitzen. Der Dreh-Schwenk-Einrichtung sind deshalb Korrekturwerte zugeordnet und im Rechner des Koordinatenmeßgerätes abgespeichert. Diese Korrekturwerte können in einem vorgeschalteten Kalibriervorgang gewonnen werden. Ebenso können die Winkelabweichungen der Winkelmeßeinrichtungen in einem Kalibriervorgang bestimmt und später rechnerisch korrigiert werden.

Im Hinblick auf eine möglichst geringe Meßunsicherheit ist es außerdem erforderlich, die Übertragung der Antriebskraft auf die drehbaren Teile der Dreh-Schwenk-Einrichtung möglichst querkraftfrei vorzunehmen. Hierfür wird zweckmäßigerweise ein Band- bzw. Riemengetriebe vorgeschlagen, das außerdem im Kollisionsfall als Rutschkupplung wirkt und eine Beschädigung der Dreh-Schwenk-Einrichtung verhindert.

Die Winkelencoder in den Achsen der Dreh-Schwenk-Einrichtung sind vorteilhaft Absolutmeßsysteme oder Inkrementalmeßsysteme mit einer zusätzlichen Referenzmarke, die den Nullpunkt des Teilkreises reproduzierbar festlegt.

Damit die Meßwerte der Dreh-Schwenk-Einrichtung im dynamischen Betrieb jederzeit in das Meßergebnis einbezogen werden können, das die Linearmaßstäbe des Koordinatenmeßgerätes liefern, ist es zweckmäßig, der Dreh-Schwenk-Einrichtung ein eigenes Koordinatensystem zuzuordnen, dessen Abstand und Ausrichtung in Bezug auf das Maschinenkoordinatensystem eindeutig bestimmt ist. Abstand und Drehlage dieses Koordinatensystems hängen vom Einbau der Dreh-Schwenk-Einrichtung in den Meßarm des Koordinatenmeßgerätes ab und werden zweckmäßig nach dem Einbau in einem Eichvorgang ermittelt.

Bei dieser Vorgehensweise ist es ausreichend, die Lage der Tastkugel in Koordinatensystemen der Meßmaschine nur einmal zu kalibrieren. Sie ergibt sich dann für jede weitere Winkelstellung aus den im Rechner abgespeicherten Daten für die Lage und Ausrichtung der Achsen der Dreh-Schwenk-Einrichtung. Ein Kalibrieren einer Vielzahl von verschiedenen Rastpositionen für jeden Taster, wie es bei Dreh-Schwenk-Einrichtungen nach dem Stand der Technik notwendig ist, ist deshalb erfindungsgemäß nicht erforderlich.

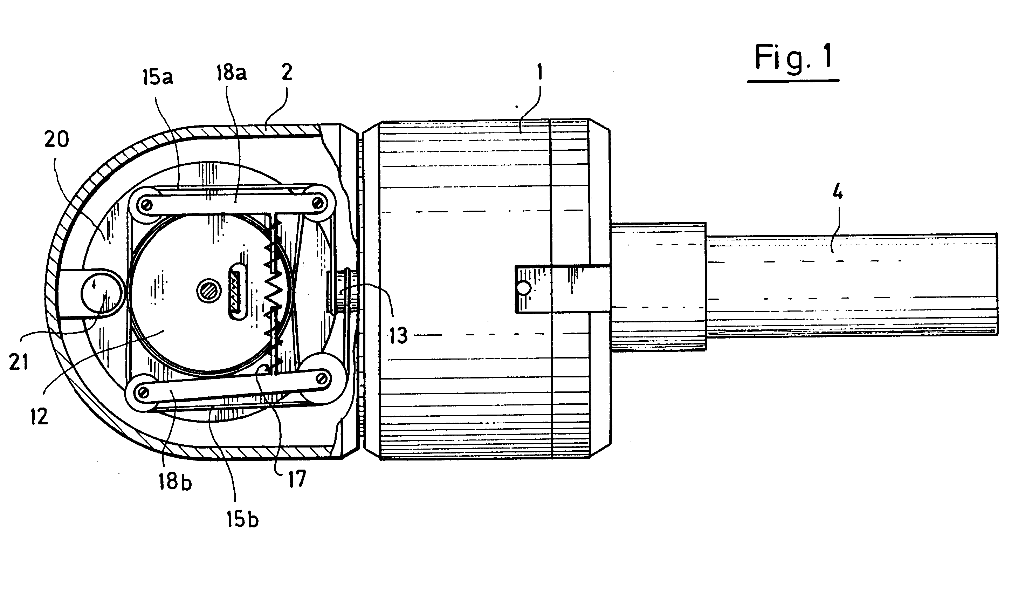

Weitere Vorteile der Erfindung ergeben sich aus der nachstehenden Beschreibung von Ausführungsbeispielen anhand der Figuren 1-10 der beigefügten Zeichnungen

| | |
|---|---|
| Figur 1: | ist ein Teilschnitt der erfindungsgemäßen Dreh-Schwenkeinrichtung entlang der Linie II in Fig. 2; |
| Figur 2: | ist ein Schnitt der Dreh-Schwenk-Einrichtung aus Fig. 1 in einer um 90° um die Achse (B) in Fig. 1 gedrehten Stellung; |
| Figur 3: | ist eine perspektivische Darstellung der Dreh-Schwenkeinrichtung aus Fig. 1 bzw. Fig. 2 in eingebautem Zustand; |
| Figur 4: | zeigt einen anstelle des schaltenden Tastkopfes (31) an der Dreh-Schwenk-Einrichtung aus Fig. 4 zu befestigenden optischen Tastköpfe; |
| Figur 5: | ist eine perspektivische Darstellung eines mit der Dreh-Schwenk-Einrichtung ausgerüsteten Koordiantenmeßgerätes; |
| Figur 6: | ist eine schematische Darstellung des Steuerungssystems des Koordintenmeßgerätes aus Fig. 5; |
| Figur 7: | ist eine perspektivische Ansicht der Dreh-Schwenkeinrichtung aus Fig. 1/2 in einer Aufspannung zur Verdeutlichung des Kalibriervorganges für die Achsen der Dreh-Schwenk-Einrichtung; |
| Figur 8: | zeigt einen anstelle des Kalibrierkörpers (51) in Fig. 7 auf die Dreh-Schwenk-Einrichtung aufsetzbaren, zweiten Kalibrierkörper zur Bestimmung der Laufabweichungen der Lager der Dreh-Schwenkeinrichtung; |
| Figur 9: | zeigt den Kalibrierkörper (53) aus Fig. 8 mit angesetztem Winkeladapter; |
| Figur 10: | ist eine Skizze zur Verdeutlichung der Lage der Koordinatensysteme von Tastkörper und Dreh-Schwenkeinrichtung im Koordinatensystem eines Koordinatenmeßgerätes; |
| Figur 11 und Figur 12: | sind Prinizpskizzen, die eine Dreh-Schwenkeinrichtung beim Einsatz zur Formprüfung von Bohrungen zeigen. |

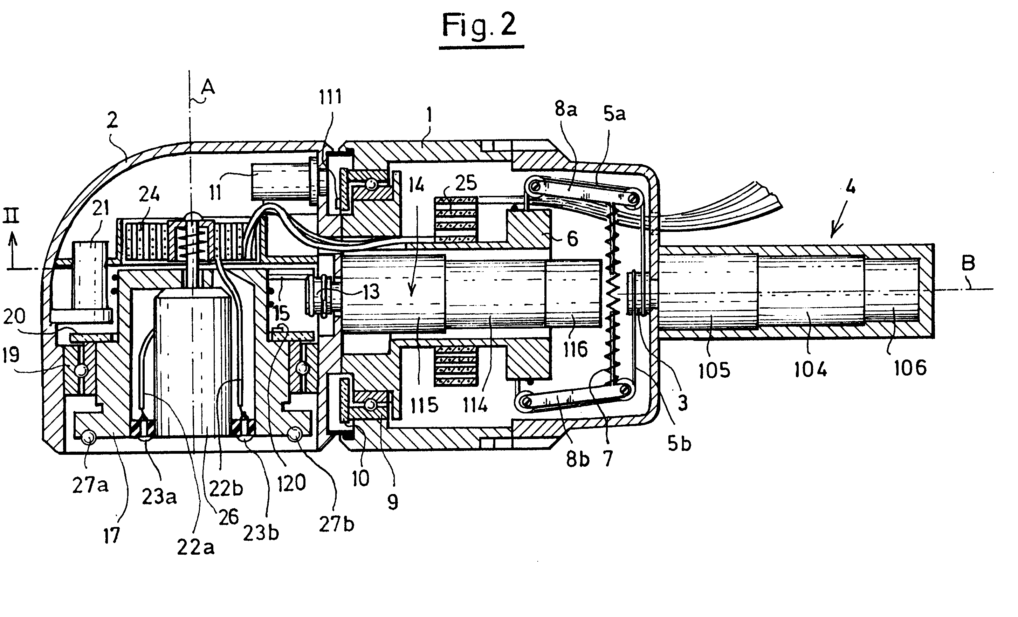

In den Figuren 1 und 2 ist der innere Aufbau des erfindungsgemäßen Dreh-Schwenk-Gelenkes dargestellt:

Es besitzt ein zylindrisches, maschinenfestes Gehäuseteil (1), an dessen einem Ende der Antrieb (4) für ein um die Symmetrieachse (B) am anderen Ende des zylindrischen Teiles (1) drehbares Gehäuseteil (2) angeordnet ist. Im Gehäuseteil (2) ist eine um die zweite Achse (A), die Schwenkachse drehbare Aufnahme (12) gelagert, an die wie noch beschrieben werden wird der Tastkopf eines Koordinatenmeßgerätes angesetzt werden kann.

Der Antrieb (4) besteht aus einem Motor (104) mit angesetztem Tachogenerator (106) und vorgesetztem Getriebe (105). Die Abtriebsrolle (3) des Antriebs wird über zwei mehrfach umgelenkte Bänder (5a und 5b) mit einer Antriebsrolle (6) für das Teil (2) verbunden. Eine Druckfeder (7) sorgt in Verbindung mit zwei Spannhebeln (8a und 8b) dafür, daß die gegenläufig um die Rolle (6) geschlungenen Bänder unter gleichmäßiger Spannung steht. Diese Art des Antriebs vermeidet Querkräfte auf das Drehlager (9), mit dem das drehbare Teil (2) des Dreh-Schwenk-Gelenkes gegenüber dem gehäusefesten Teil (1) gelagert ist.

Zur Messung des Drehwinkels des Teils (2) dient ein Winkelencoder in Form eines Teilkreises (10), der von einem optoelektronischen Lesekopf (11) abgetastet wird. Mit (111) ist eine Nullimpulsmarke bezeichnet, die von einem entsprechenden Geber abgetastet wird, und einen Initialisierungsimpuls zur Festlegung der Nullage des Winkelmeßsystems liefert.

In das Innere der hohlen Antriebsrolle (6) hineinragend ist am drehbaren Teil (2) ein zweiter Antrieb (14) befestigt, der ebenfalls wieder aus einem Motor (114), einem Tachogenerator (116) und einem Getriebe (115) besteht. Ein zweites Bandgetriebe mit den zwei Bändern (15a und 15b) verbindet die Abtriebsrolle (13) des Antriebs (14) mit der drehbaren Aufnahme (12) für den anzusetzenden Tastkopf. Die Aufnahme (12) ist über ein Kugellager (19) im Gehäuseteil (2) gelagert und besitzt die Form eines Hohlzylinders, um dessen Außenumfang der Bandantrieb (15a und 15b) geschlungen ist.

Ein zweiter Teilkreis (20) mit aufgesetzter Nullimpulsmarke (120) dient in Verbindung mit einem zweiten optoelektronischen Lesekopf (21) zur Messung des Schwenkwinkels der Aufnahme (12) um die Achse (A).

Im Inneren der hohlzylindrischen Aufnahme (12) ist in einer Hülse (26) entlang der Achse (A) beweglich gelagert ein Elektromagnet untergebracht. Dieser Elektromagnet dient zum Festhalten einer hier nicht dargestellten, auf die Kugeln (27) aufgelegten Tragplatte, an dem der einzuwechselnde Taster befestigt ist. Eine derartige elektromagnetische Wechseleinrichtung ist an sich bekannt und beispielsweise im US-Patent 46 37 119 beschrieben, so daß an dieser Stelle hierauf nicht näher eingegangen werden muß.

Um die Hülse (26) herum sind mehrere Kontakte (23) an der Wechselfläche der Aufnahme (12) angeordnet, die zur Signalübertragung aus dem angesetzten Tastkopf an das Koordinatenmeßgerät dienen. Das zugehörige Bandkabel (22a,b) ist jeweils zu einem Wickel (24) bzw. (25) aus mehreren Windungen um die Achsen (A) bzw. D herumgelegt, um Zugspannungen beim Verdrehen bzw. Verschwenken der Teile (2) und (12) zu vermeiden.

Bei den Lagern (9) und (10) handelt es sich um spielfrei gegeneinander verspannte Kugellager hoher Laufgenauigkeit, die außerdem ein reproduzierbares Ablaufverhalten zeigen. Ein solches Verhalten ist für die Meßwerterfassung mit dem Dreh-Schwenk-Gelenk besonders wichtig, da dann eine rechnerische Korrektur der Meßwerte um die einmal ermittelten Ablauffehler ermöglicht und somit die Meßunsicherheit vermindert wird. Als Lager können beispielsweise die in der EP-B-0 111 125 beschriebenen Wälzlager verwendet werden.

Das in den Figuren 1 und 2 detailliert dargestellte Dreh-Schwenk-Gelenk wird wie in Figur 3 beschrieben beispielsweise am Querarm (50) einer Meßmaschine in Ständerbauweise angesetzt. Hierbei verschwindet der ausladende Antrieb (4) der Drehachse (B) im Inneren des Meßarmes (50).

In der gezeigten Darstellung ist an die Aufnahme (12) des Dreh-Schwenk-Gelenkes ein Tastkopf (31) vom schaltenden Typ angesetzt wie er beispielsweise in der Patentanmeldung DE-A-36 34 689 der Anmelderin mit dem Titel "Anordnung für den gleichzeitigen Anschluß mehrerer Tastköpfe vom schaltenden Typ an den Meßarm eines Koordinatenmeßgerätes" vom 11.10.1986 beschrieben ist. Der Tastkopf (31) ist mittels eines Adapterteils (35) an der Halteplatte (30) befestigt, die ihrerseits mit Gegenlagern versehen ist, die auf den Kugeln (27) der Aufnahme (12) des Dreh-Schwenk-Gelenkes aufsitzen.

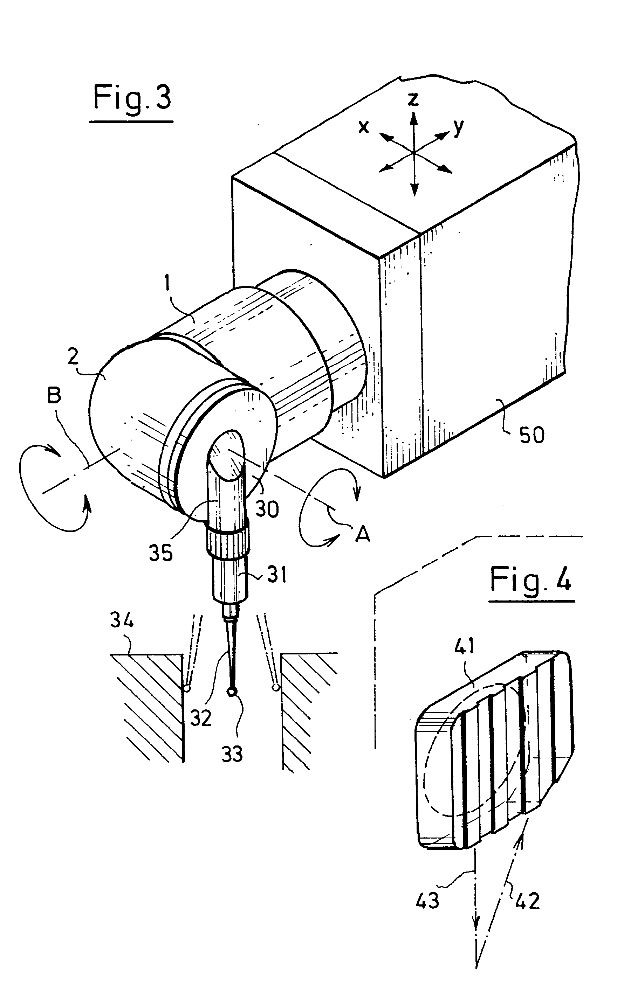

Es ist weiterhin möglich, an der Aufnahme (12) andere Tastköpfe wie z.B. den in Figur 4 dargestellten Triangulationstaster (41) zu befestigen bzw. die beiden Tastköpfe gegeneinander auszuwechseln. Triangulationstaster, die anstelle eines Taststiftes (32) und einer Tastkugel (33) zur Antastung des Werkstückes (34) einen Laserstrahl (43) aussenden, dessen Auftreffen auf die Werkstückoberfläche von einer zum Beleuchtungsstrahl (43) geneigten Optik ausgewertet wird, sind ebenfalls ansich bekannt und beispielsweise in der EP-A- 0 156 991 oder der EP-A- 0 163 347 beschrieben.

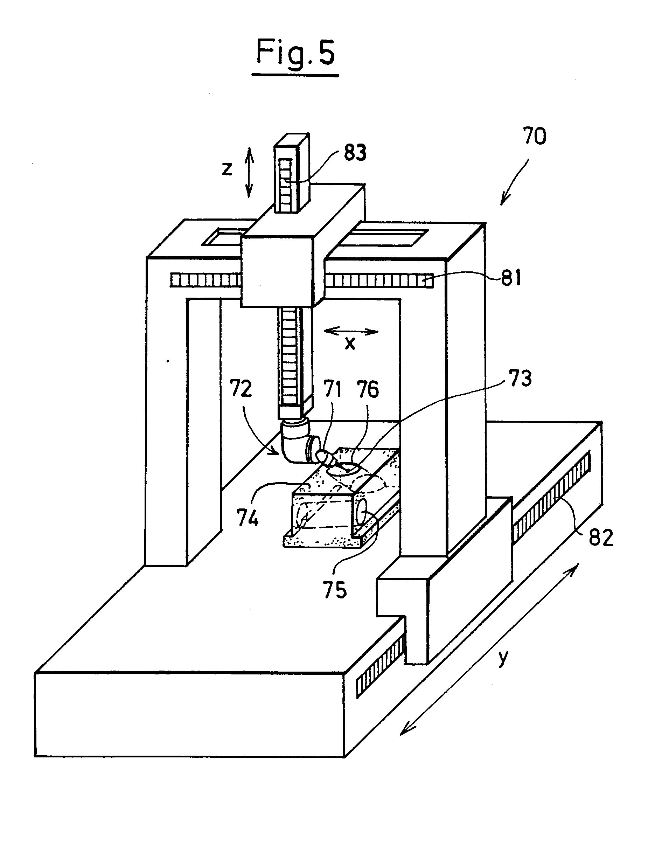

In Figur 5 ist das Dreh-Schwenk-Gelenk in senkrechter Einbaulage an der Pinole eines Koordinatenmeßgerätes (70) in Portalbauweise befestigt dargestellt. Wie aus der Figur ersichtlich ist können mit Hilfe des einen am Dreh-Schwenk-Gelenk (72) befestigten Tasters (71) Bohrungen (75,76) am Werkstück (74), die unter verschiedenen Richtungen in Bezug auf das Maschinenkoordinatensystem geneigt sind, angetastet werden. Hierbei sind prinzipiell zwei Betriebsarten möglich:

In einer ersten Betriebsart dient das Dreh-Schwenk-Gelenk (72) dazu, den daran befestigten Taster in die gewünschten Winkelstellungen auszurichten. Der Antastvorgang findet dann durch Bewegen der Maschinenantriebe X, Y und Z statt, denen die Linearmeßsysteme (81), (82) und (83) zugeordnet sind.

In einer zweiten Betriebsart positioniert das Koordinatenmeßgerät (70) den Tastkopf (71) beispielsweise in den Bohrungen (75,76) des Werkstücks und der Antastvorgang findet bei stillgesetzten Linearantrieben allein durch ein Verdrehen bzw. Verschwenken des Tastkopfes (71) mit Hilfe der Dreh-Schwenk-Einrichtung (72) statt. Der Vorteil dieser Betriebsweise ist in der höheren erzielbaren Meßgeschwindigkeit aufgrund der sehr viel kleineren zu bewegenden Massen und einer gesteigerten Meßgenauigkeit zu sehen.

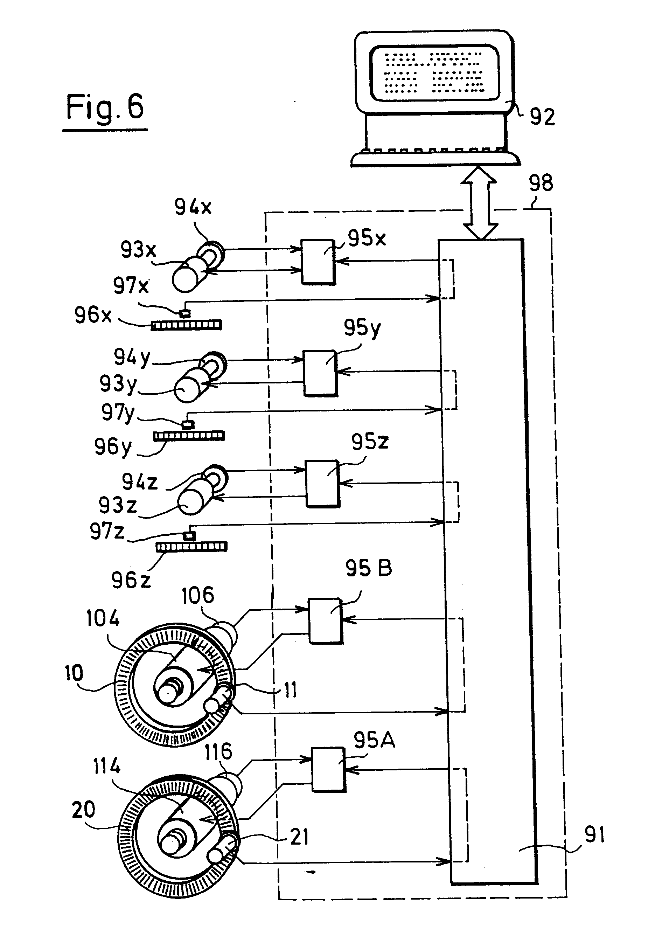

In Figur 6 ist die Steuerung des Koordinatenmeßgerätes aus Figur 5 in vereinfachter Darstellung skizziert. Kernstück der Steuerelektronik (98) ist ein Mikroprozessorsystem (91), der über einen Datenbus mit dem Steuerrechner (92) des Koordinatenmeßgerätes verbunden ist. Die Antriebe (93x, 93y und 93z) für die linear bewegten Teile des Koordinatenmeßgerätes mit den daran angesetzten Tachogeneratoren (94x, 94y und 94z) sind über die Schaltungen (95x, 95y und 95z) in Geschwindigkeitsregelkreise eingebunden,

4

die vom Mikroprozessor gesteuert werden.

Diesen Geschwindigkeitsregelkreisen ist jeweils ein Positionsregelkreis überlagert, der von den Linearmaßstäben (96x, 96y, 96z) bzw. deren Meßwertgebern (97x, 97y, 97z) geschlossen wird.

In gleicher Weise ist die Steuerung für das Dreh-Schwenk-Gelenk aufgebaut. Die Tachogeneratoren (106) und (116) der Antriebsmotoren (104) und (114) für das Verdrehen um die Achse (B) bzw. das Verschwenken um die Achse (A) sind über die Schaltungen (95A) und (95B) in einen Geschwindigkeitsregelkreis gelegt. Diesem Geschwindigkeitsregelkreis ist ein Positionsregelkreis überlagert, in dem die Winkelencoder (9/11) bzw. (10/21) des Dreh-Schwenk-Gelenkes eingebunden sind.

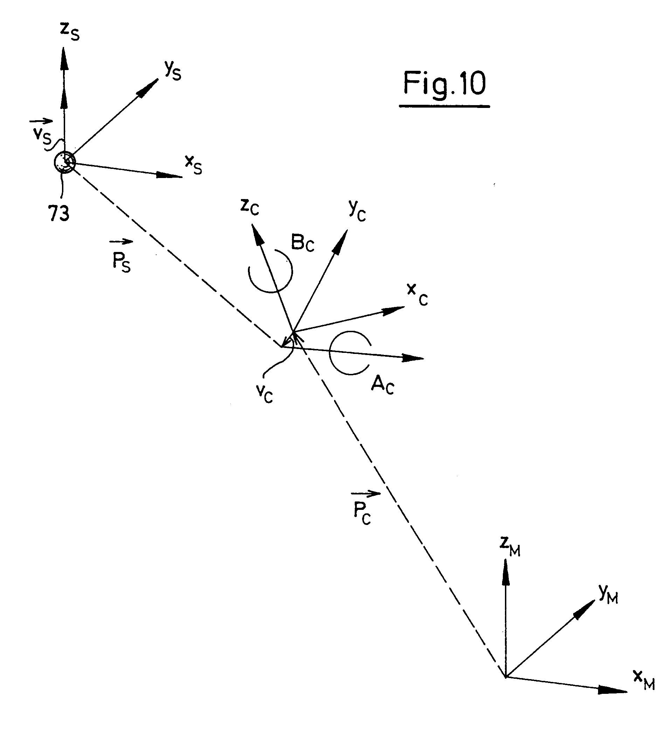

Nachfolgend wird beschrieben, wie die Meßwerte bzw. die Antastkoordinaten der Tastkugel des an das Dreh-Schwenk-Gelenk angesetzten Tastkopfes aus den Meßwerten der Linearmaßstäbe und der Winkelencoder gewonnen werden. Hierbei wird Bezug genommen auf die Darstellung in Figur 10, in denen die Ausrichtung der verschiedenen Koordinatensysteme beschrieben ist.

Das aus den Linearführungen des Koordinatenmeßgerätes aufgespannte Maschinenkoordinatensystem ist durch die Pfeile $\vec{X}_M$, $\vec{Y}_M$ und $\vec{Z}_M$ charakterisiert. Es ist nun zweckmäßig, ein Koordinatensystem für das Dreh-Schwenk-Gelenk einzuführen. Dies ist mit den Pfeilen $\vec{X}_C$, $\vec{Y}_C$ und $\vec{Z}_C$ bezeichnet.

Dieses zweite Koordinatensystem ist mit seinem Ursprung gegenüber dem ersten Koordinatensystem um einen Abstand verschoben, den der Pfeil $\vec{P}_C$ beschreibt. Außerdem ist dieses zweite Koordinatensystem abhängig von seiner Einbaulage gegenüber dem ersten Koordinatensystem gedreht, was durch die Drehmatrix $D_C$ beschrieben werden kann.

Der Einfachheit halber sei angenommen, daß die Koordinatenrichtung $\vec{Z}_C$ des Koordinatensystem der Dreh-Schwenk-Einrichtung mit der Drehachse (B) der Dreh-Schwenk-Einrichtung zusammenfällt. Die Schwenkachse(A)der Dreh-Schwenk-Einrichtung sollte zwar die Achse (B) im rechten Winkel schneiden, dies ist jedoch fertigungsbedingt nicht immer zu erreichen. Tatsächlich wird in der Praxis ein geringer Abstand vorhanden sein, unter dem die beiden Achsen aneinander vorbeilaufen. Abweichungen der Rechtwinkligkeiten beider Achsen voneinander sind durch die nichtparallele Ausrichtung der Achse $A_C$ zu den Pfeilen $\vec{X}_C$, $\vec{Y}_C$, $\vec{Z}_C$ des Koordinatensystems der Dreh-Schwenk-Einrichtung Rechnung getragen.

Der Tastkugel am Taststift des Tastkopfes läßt sich nun ein drittes Koordinatensystem zuordnen, welches einen Abstand $\vec{P}_S$ von der Achse (A) im Koordinatensystem der Dreh-Schwenk-Einrichtung besitzt. Die Orientierung dieses Koordinatensystems $\vec{X}_S$, $\vec{Y}_S$ und $\vec{Z}_S$ ist von der momentanen Winkelstellung um die beiden Achsen (A) und (B) abhängig. Für die zugehörige Transformation ist es zweckmäßig die dynamischen Drehmatrizen $D_A$ und $D_B$ einzuführen, durch die Orientierung des dritten Koordinatensystems festgelegt ist.

Aufgrund der vorstehenden Betrachtung ergibt sich, daß man eine sogenannte "dynamische Tasterkoordinate" einführen kann, die sich nach folgender Matrixgleichung berechnet:

$$\vec{D} = \vec{P}_C + D_C \left[ D_B \cdot \left( D_A \cdot \vec{P}_S + \vec{V}_C \right) \right] \qquad\qquad I$$

Hierin sind $\vec{P}_S$, $\vec{V}_C$ und $D_C$ Parameter, die, wie noch beschrieben werden wird, durch Eich- bzw. Kalibrierprozesse gewonnen werden müssen. In die dynamischen Drehmatrizen $D_A$ und $D_B$ gehen die Winkelmeßwerte der Encoder (9) bzw. (10) des Dreh-Schwenk-Gelenkes ein, während in den Vektor $\vec{P}_C$ die Meßwerte der Linearmaßstäbe des Koordinatenmeßgerätes eingehen, d.h.

$$\vec{P}_C = \vec{P}_0 + \begin{pmatrix} x \\ y \\ z \end{pmatrix} . \qquad\qquad II$$

Hierin beschreibt $\vec{P}_0$ den Abstand des Nullpunktes des Koordinatensystems der Dreh-Schwenk-Einrichtung vom Nullpunkt des Koordinatensystems des Meßgerätes ohne Dreh-Schwenk-Einrichtung.

Bei Kenntnis der vorstehend genannten Parameter ist es also möglich, die Antastkoordinaten der Tastkugel (73) zu jedem Zeitpunkt aus den Meßwerten der Linearmaßstäbe und der Drehgeber zu berechnen. Hierbei ist zu berücksichtigen, daß die angegebene Formel (I) für einen kugelsymmetrischen Antastkörper gilt. Wird zum Antasten der in Figur 4 dargestellte Triangulationstaster verwendet, so ist der mit diesem Taster ermittelte Abstands-Meßwert $\vec{V}_S$ im Tasterkoordinatensystem $\vec{Z}_S$, $\vec{Y}_S$, $\vec{X}_S$ hinzuzufügen, was in Gleichung (I) dadurch ausgedrückt werden kann, daß $\vec{P}_S$ durch ($\vec{P}_S$ + $\vec{V}_S$) ersetzt wird.

EP 0 317 967 B1

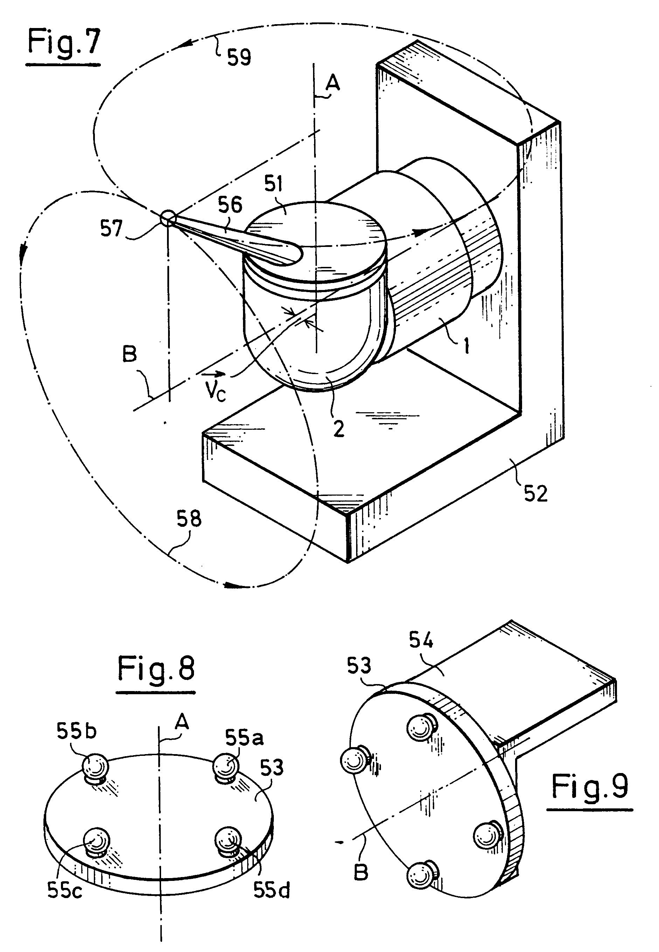

Die Ausrichtung der Achse $A_C$ im Koordinatensystem der Dreh-Schwenk-Einrichtung sowie der Abstand $\vec{V_C}$ der beiden Achsen können vor dem Einbau der Dreh-Schwenk-Einrichtung bestimmt werden, indem die Dreh-Schwenk-Einrichtung beispielsweise, wie das in Figur 7 skizziert ist in eine Halterung (52) eingesetzt wird und auf einem separaten Koordinatenmeßgerät einer Abnahmeprüfung unterzogen wird. Hierbei ist auf die Aufnahme (12) der Dreh-Schwenk-Einrichtung eine Halteplatte mit einer exzentrisch zu den Achsen (A) und (B) angeordneten Kugel (57) aufgesetzt.

Die Lage der beiden Achsen (A) und (B) wird dadurch bestimmt, daß die Lage der Kugel (57) jeweils in verschiedenen Winkelstellungen bei Drehung um die Achsen (A) und (B) angetastet wird. Hierbei wandert der Kugelmittelpunkt jeweils auf einer der beiden mit (58) und (59) bezeichneten Kreisbahnen. Die tatsächliche Lage der Achsen (A), bzw. (B) ergibt sich als Normale auf eine bestmöglich an die Meßpunkte angepaßte Kreisebene durch den Mittelpunkt des Kreises. Dieses Verfahren zur Bestimmung von Achslage ist ansich bekannt und beispielsweise in der US-A-4 369 581 beschrieben.

Zur Verringerung der Meßunsicherheit der von der Dreh-Schwenk-Einrichtung gelieferten Winkelwerte ist es weiterhin zweckmäßig, die Ablauffehler der Drehlager des Dreh-Schwenk-Gelenkes bzw. die Teilungsfehler der Winkelencoder zu ermitteln. Hierbei kann das von der Anmelderin am 03.11.1986 angemeldete Verfahren mit dem Titel: "Verfahren zur Messung von Drehtischabweichungen" (DE-A-36 37 410) eingesetzt werden.

Hierzu wird anstelle der Platte (51) die in Figur 8 dargestellte Platte (53) mit vier Kugeln (55a-d) an die Aufnahme des Dreh-Schwenk-Gelenkes angesetzt. Anschließend werden die Mittelpunkte der Kugeln in sehr vielen Winkelstellungen gemessen und daraus die Laufabweichungen der Drehachse bzw. die Winkelpositionsabweichung für die Achse (A) bestimmt. In gleicher Weise werden diese Fehler für die Achse (B) bestimmt, indem die Platte (53) unter Zwischenschaltung der rechtwinkligen Adapterplatte (54) an der Aufnahme (12) des Dreh-Schwenk-Gelenkes befestigt wird. Die Benutzung der so gewonnenen Meßwerte zur Korrektur der Lauffehler der Lager setzt allerdings voraus, daß diese reproduzierbar sind, d.h. ein langperiodisches Verhalten zeigen.

Nachdem also wie vorstehend beschrieben Abstand und Lage der beiden Achsen (A) und (B) zueinander im Koordinatensystem der Dreh-Schwenk-Einrichtung und deren Ablauffehler bestimmt worden sind, ist es nötig, die Lage des Koordinatensystems der Dreh-Schwenk-Einrichtungim eingebauten Zustand relativ zum Maschinenkoordinatensystem des Koordinatenmeßgerätes zu bestimmen, d.h. den Ortsvektor $\vec{P_0}$ in Gleichung II und die Drehmatriz $D_C$ in Gleichung I zu ermitteln. Die zugehörigen sechs Unbekannten können durch Aufnahme einer entsprechenden Zahl von Meßwerten in verschiedenen Winkelstellungen eines an die Dreh-Schwenk-Einrichtung angesetzten Tastkopfes beim Antasten eines Geometrieelementes bekannter Lage und Abmessung gewonnen werden. Im allgemeinen geht man hier so vor, daß beispielsweise eine Eichkugel oder ein Eichwürfel an definierter Stelle im Meßraum des Koordinatenmeßgerätes aufgestellt wird und die Antastung daran vorgenommen wird. Ist der Vektor $\vec{P_S}$ zusätzlich unbekannt, d.h. die Lage der Tastkugel im Koordinatensystem der Dreh-Schwenk-Einrichtung nicht verfügbar, so können diese Werte im gleichen Kalibrierprozess gewonnen werden, indem einfach die Zahl der anzutastenden Meßpunkte um mindestens drei weitere erhöht wird.

Wenn nach Durchführung der vorstehend beschriebenen Kalibrier- und Eichvorgänge die Dreh-Schwenk-Einrichtung mit angesetztem Tastkopf für Meßaufgaben verwendet wird, dann ist der Steuerrechner (92) des Koordinatenmeßgerätes in der Lage, die Istkoordinaten für jeden Antastpunkt aus den Meßwerten der Linearmaßstäbe des Koordinatenmeßgerätes, der Winkelencoder der Dreh-Schwenk-Einrichtung sowie den abgespeicherten Korrekturwerten entsprechend Gleichung I zu berechnen, unabhängig davon, ob der Antastvorgang durch eine Linearbewegung oder eine Dreh-Schwenk-Bewegung des Tastkopfes herbeigeführt wurde.

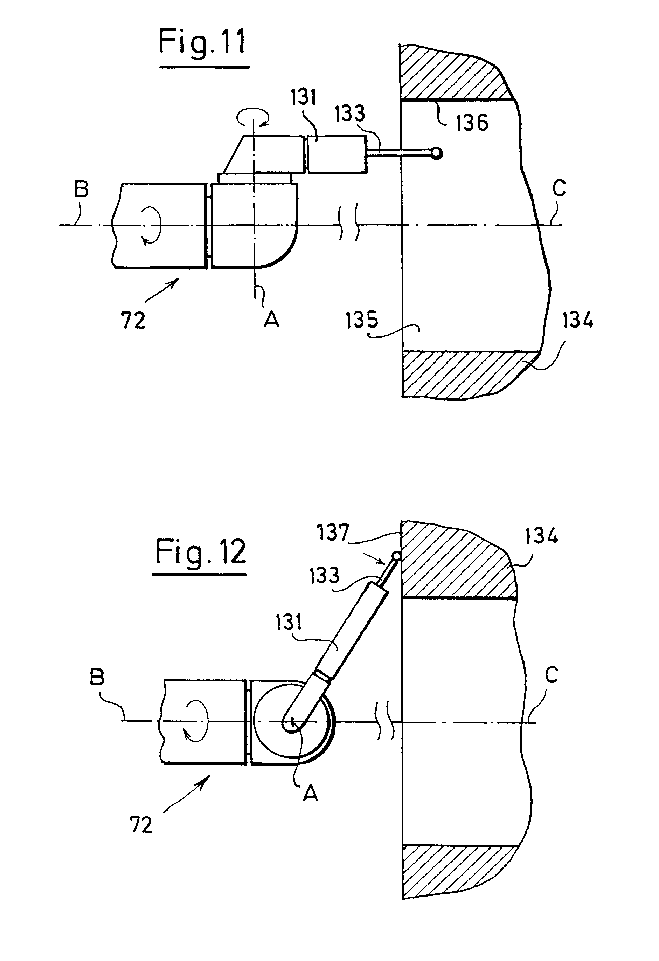

Neben einem punktweisen Antasten beliebiger Werkstückbereiche mit Hilfe der Dreh-Schwenk-Einrichtung ist es jedoch auch möglich, Formprüfungen durch kontinuierliche Abtastung des Werkstückes durchzuführen. Hierfür eignen sich insbesondere kreis- oder zylinderförmige Flächen wie z.B. Bohrungen. Ein typischer Anwendungsfall ist in Figur 11 dargestellt. Zur Formprüfung der Innenseite (136) der Bohrung (135) im Werkstück (134) wird die Pinole des Koordinatenmeßgerätes so positioniert, daß die Drehachse (B) der Dreh-Schwenk-Einrichtung etwa mit der Achse (C) der Bohrung (135) fluchtet. Anschließend wird die Fläche (136) durch Verschwenken des Tastkopfes (131) angetastet, bis der Taststift (133) mit seiner Tastkugel an der Fläche (136) anliegt. Durch Drehen der Dreh-Schwenk-Einrichtung um die Achse (B) wird dann die Form der Bohrungsinnenseite (136) ausgespindelt.

In ähnlicher Weise kann die Ebenheit der Fläche (137) senkrecht zur Bohrungsachse (C) geprüft werden (Figur 12). Auch hier wird mittels der Schwenkachse (A) angetastet und durch Drehung um die zur Bohrungsachse (C) ausgerichtete Drehachse (B) ausgespindelt.

6

In einer weiteren Betriebsweise können auch Formprüfungen an Bohrungen vorgenommen werden, die unter verschiedenen Richtungen verlaufen. Hier wird zuerst der Schnittpunkt der beiden Achsen (A) und (B) der Dreh-Schwenk-Einrichtung auf der Achse der jeweiligen Bohrung positioniert und anschließend die Bohrung durch eine gleichzeitige, koordinierte Bewegung beider Achsen (A) und (B) angetastet und ausgespindelt.

Zur Durchführung der Formprüfungen können sowohl Mehrkoordinatentastköpfe vom sogenannten messenden Typ verwendet werden als auch eindimensional anzeigende Fühlhebeltaster oder berührungslos messende optische oder kapazitive Abstandssensoren.

Da die Maschinenachsen des Koordinatenmeßgerätes bei diesen Messungen stillstehen, wird die erzielbare Meßgenauigkeit allein von den Fehlern der Dreh-Schwenk-Einrichtung und des Tastkopfes bestimmt.

## Patentansprüche

1. Dreh-Schwenk-Einrichtung für Tastköpfe (31,41) von Koordinatenmeßgeräten, mit mindestens zwei motorisch verstellbaren Drehachsen (A,B) zur winkelmäßigen Ausrichtung der Tastköpfe, wobei die Dreh-Schwenk-Einrichtung
   Drehlager (9,19) in den Achsen (A,B);
   Winkelencoder (10,20) zur Rückmeldung der eingestellten Dreh- bzw. Schwenkwinkel an den Rechner (92) eines Koordinatenmeßgerätes und
   aktive Positionsregelkreise enthält, durch die der Winkelencoder (10,20) und der Antrieb (4,14) der jeweiligen Achse (A,B) in die Steuerung des Koordinatenmeßgerätes eingebunden sind,
   dadurch gekennzeichnet,
   daß die Drehlage (9,19) ein reproduzierbares Laufverhalten besitzen,
   daß der Dreh-Schwenk-Einrichtung Korrekturwerte zugeordnet sind, die in einem Kalibriervorgang gewonnen wurden und im Rechner (92) des Koordinatenmeßgerätes gespeichert sind, wobei die Korrekturwerte Winkelpositionsabweichungen, die Lage der Drehachsen (B) bzw. Schwenkachsen (A) zueinander und/oder Laufabweichungen der Achsen (A, B) beschreiben,
   und daß die Steuerung so betreibbar ist, daß sie über die Antriebe der Dreh-Schwenk-Einrichtung entweder eine voreingestellte Ausrichtung des Tastkopfes (31,41) im Raum festhält oder das zu vermessende Werkstück (34) bei stillgesetzten Linearantrieben des Koordinatenmeßgerätes allein mit Hilfe der Dreh-Schwenk-Einrichtung gezielt antastet.

2. Dreh-Schwenk-Einrichtung nach Anspruch 1, dadurch gekennzeichnet, daß zur querkraftfreien Übertragung der Antriebskraft von den Antrieben (4,14) auf die drehbaren Teile (2,12) der Dreh-Schwenk-Einrichtung ein Band- bzw. Riemengetriebe (5,15) vorgesehen ist.

3. Dreh-Schwenk-Einrichtung nach Anspruch 1, dadurch gekennzeichnet, daß die Winkelencoder (10,20) Absolutmeßsysteme oder Inkrementalmeßsysteme mit mindestens einer zusätzlichen Referenzmarke (111,120) sind.

4. Dreh-Schwenk-Einrichtung nach Anspruch 1, dadurch gekennzeichnet, daß die Dreh-Schwenk-Einrichtung eine Dreh- und eine Schwenkachse besitzt, wobei die Schwenkachse (A) an der Drehachse (B) gelagert ist, und die Aufnahme (12,27) zur Befestigung des Tastkopfes (31) an der Dreh-Schwenk-Einrichtung exzentrisch zur Drehachse (B) auf der Schwenkachse (A) angeordnet ist.

5. Verfahren zur Koordinatenvermessung von Werkstücken, mit einem Koordinatenmeßgerät dessen Tastkopf an einer Dreh-Schwenk-Einrichtung befestigt ist, dadurch gekennzeichnet, daß die zu vermessenden Punkte am Werkstück (34,74,134) zumindest teilweise bei stillgesetzten Linearantrieben des Koordinatenmeßgerätes (50) allein durch eine Winkelbewegung des Tastkopfes (31,131,71) mit Hilfe der Dreh-Schwenk-Einrichtung (2,72) angetastet werden, wobei zur Formprüfung von kreisförmigen bzw. zylindrischen Flächen (136,137) mit einem an die Dreh-Schwenk-Einrichtung (72) angesetzten messenden Tastkopf (131) zuerst die Drehachse (B) der Dreh-Schwenk-Einrichtung von den Antrieben des Koordinatenmeßgerätes auf die Symmetrieachse (C) der Fläche (136,137) positioniert wird, dann die zu prüfende Fläche durch den Schwenkantrieb (A) der Dreh-Schwenk-Einrichtung angetastet wird und die Abtastung der Kreis-bzw. Zylinderfläche durch den Antrieb der Drehachse (B) der Dreh-Schwenk-Einrichtung bewirkt wird.

6. Verfahren zur Koordinatenmessung von Werkstücken, mit einem Koordinatenmeßgerät dessen Tastkopf an einer Dreh-Schwenk-Einrichtung befestigt ist, dadurch gekennzeichnet, daß die zu vermessenden Punkte am Werkstück (34,74,134) zumindest teilweise bei stillgesetzten Linearantrieben des Koordinatenmeßgerätes (50) allein durch eine Winkelbewegung des Tastkopfes (31,131,71) mit Hilfe der Dreh-Schwenk-Einrichtung (2,72) angetastet werden, wobei zur Formprüfung von kreis- bzw. zylindersymmetrischen Flächen mit einem an die Dreh-Schwenk-Einrichtung angesetzten, messenden Tastkopf die Dreh-Schwenk-Einrichtung zuerst mit dem Schnittpunkt der Dreh- und Schwenkachse auf der Symmetrieachse der Fläche positioniert wird und anschließend die zu prüfende Fläche durch eine simultane Bewegung beider Achsen der Dreh-Schwenk-Einrichtung abgetastet wird.

7. Verfahren zur Koordinatenvermessung von Werkstücken mit einem Koordinatenmeßgerät, dessen Tastkopf an einer Dreh-Schwenk-Einrichtung befestigt ist, dadurch gekennzeichnet, daß

   a) einbauunabhängige Winkelgeometrie- bzw. Laufabweichungen der Achsen der Dreh-Schwenk-Einrichtung in einem Kalibriervorgang ermittelt und als Korrekturwerte dem Rechner des Koordinatenmeßgerätes eingegeben werden;

   b) der Dreh-Schwenk-Einrichtung ein eigenes Koordinatensystem zugeordnet wird, indem bei an die Dreh-Schwenk-Einrichtung angesetztem Tastkopf ein Geometriekörper mit bekannter Abmessung und Lage im Koordinatensystem des Koordinatenmeßgerätes in mehreren Stellungen der Achsen (A,B) der Dreh-Schwenk-Einrichtung angetastet wird und aus den Meßwerten der Ortsvektor $\vec{P_C}$ vom Maschinenkoordinatensystem $(X_M,Y_M,Z_M)$ zum Koordinatensystem $(X_C,Y_C,Z_C)$ der Dreh-Schwenk-Einrichtung ermittelt und die Drehlage $D_C$ dieses Koordinatensystems $(X_C,Y_C,Z_C)$ sowie die Koordinate $\vec{P_S}$ und Abmessung r des Tastelements im Koordinatensystem der Dreh-Schwenk-Einrichtung als Parameter bestimmt werden und ebenfalls dem Rechner des Koordinatenmeßgerätes eingegeben werden

   c) bei der anschließenden Vermessung unbekannter Werkstücke neben den Meßwerten der Längenmeßeinrichtungen des Koordinatenmeßgerätes die bei der Kalibrierung gewonnenen einbauunabhängigen Korrekturwerte, die bestimmten einbauabhängigen Parameter und die momentanen Meßwerte der Encoder der Dreh-Schwenk-Einrichtung zur Berechnung der Istlage des Tastelements mit berücksichtigt werden.

8. Verfahren nach Anspruch 7, dadurch gekennzeichnet, daß die Berechnung der Istlage des Tastelements gemäß folgender Gleichung erfolgt:

$$\vec{D} = \vec{P_C} + D_C \cdot \left[ D_B \cdot ( D_A \cdot \vec{P_S} + \vec{V_C} ) \right]$$

und die Größen folgende Bedeutung besitzen:

$\vec{P_S}$ Ortsvektor, der die Lage des Tastelements im Koordinatensystem der Dreh-Schwenk-Einrichtung beschreibt

$\vec{V_C}$ Abstandsvektor, unter dem die beiden Achsen der Dreh-Schwenk-Einrichtung aneinander vorbeilaufen

$D_A$ Drehmatrix, die die Drehung des Tastkopfes um die Schwenkachse (A) der Dreh-Schwenk-Einrichtung um den gemessenen Schwenkwinkel beschreibt

$D_B$ Drehmatrix, die die Drehung des Tastkopfes um die Drehachse (B) der Dreh-Schwenk-Einrichtung um den gemessenen Drehwinkel beschreibt.

$D_C$ Drehmatrix, die die Orientierung des Koordinatensystems der Dreh-Schwenk-Einrichtung im Maschinenkoordinatensystem des Koordinatenmeßgerätes beschreibt

$\vec{P_C}$ Lagevektor, der die Lage des Koordinatensystems der Dreh-Schwenk-Einrichtung im Maschinenkoordiantensystem beschreibt.

**Claims**

1. An articulating device for probe heads (31,41) of coordinate measuring machines, said device having at least two rotary axes (A,B) about which motor-driven angular adjustment can be made in the orientation of the probe heads, which articulating device contains:
   rotary bearings (9,19) in the axes (A,B);

angle encoders (10,20) for the reporting of instantaneously driven values of the angle of rotation and the swivel angle to the computer (92) of a coordinate-measuring machine; and

active position control circuitry by which each angle encoder (10,20) and its drive (4,14) about one of the articulating axes (A,B) are integrated into the control of the coordinate-measuring machine, characterized by the fact,

that said rotary bearings (9,19) have a reproducible travel behavior,

that correction values pertaining to angular displacement about the respective articulation axes are associated with the articulating device and stored in the computer (92) of the coordinate-measuring machine, said correction values having been previously obtained in a calibration procedure and reflecting deviations in angular position, position errors of the respective articulation axes (A,B) and/or deviations in rotary travel about the articulation axes (A,B),

and that the control provides to be used in a manner that a preset orientation of the probe head (31,41) in space is maintained via the drives of the articulating device, or that a targeted probing contact is effected on the workpiece (34) to be measured solely by means of the articulating device.

2. An articulating device according to claim 1, characterized by the fact that a belt or strap transmission (5,15) is provided for torque transmission without transverse reaction forces attributable to torque delivered by drives (4,14) to the rotatable parts (2,12) of the articulating device.

3. An articulating device according to claim 1, characterized by the fact that the angle encoders (10,20) are absolute-measurement systems or incremental-measurement systems having at least one additional reference mark (111,120).

4. An articulating device according to claim 1, characterized by a first rotary axis and a second swivel axis, the second swivel axis (A) being mounted rotatable about the first rotary axis (B), and a chucking receptacle (12,27) for probe head (31) attachment to the articulating device being arranged at the second swivel axis (A) and at eccentric offset from the first rotary axis (B).

5. A method for the coordinate measurement of workpieces, using a coordinate-measuring machine having an articulating device with a probe head mounted thereon characterized by the fact that the points to be measured on the workpiece (34,74,134) are contacted at least partly while the linear drives of the coordinate-measurement machine (50) are arrested and solely by an angular displacement of the probe head (31,131,71) via actuation of the articulating device (2,72) and that when testing the shape of circular or cylindrical surfaces (136,137) with a probe head (131) of the measuring type attached to the articulating device (72) the rotary axis (B) of the articulating device is first of all positioned by the drives of the coordinate-measuring machine into coincidence with the axis of symmetry (C) of the surface (136,137) to be tested, that the surface to be tested is then contacted by driven rotation about the swivel axis (A) of the articulating device, and that a circular tracing of the circular or cylindrical surface is thereafter effected by driven rotation about said rotary axis (B) of the articulating device.

6. A method for the coordinate measurement of workpieces, using a coordinate-measuring machine having an articulating device with a probe head mounted thereon characterized by the fact that the points to be measured on the workpiece (34,74,134) are contacted at least partly while the linear drives of the coordinate-measurement machine (50) are arrested and solely by an angular displacement of the probe head (31,131,71) via actuation of the articulating device (2,72), and that when using a probe head (133) of the measuring type mounted to the articulating device for testing the shape of symmetrical circular or cylindrical surfaces, the articulating device is first of all positioned with the point of intersection of its axes on the axis of symmetry of the surface, and that thereupon the surface to be tested is traced by coordinated simultaneous driven rotation about both axes of the articulating device.

7. A method for the coordinate measurement of workpieces, using a coordinate-measuring machine having an articulating device with a probe head mounted thereon characterized by the fact that

a) deviations in angular geometry and/or travel in the course of rotation about the axes of the articulating device which are independent of installation are determined in a calibrating process and entered as correction values in the computer of the coordinate-measuring machine;

b) a separate coordinate system is associated to the articulating device by positioning a geometrical body of known dimension in the coordinate system of the measuring machine, and by probing the geometrical body for several angular positions of rotation about the articulation axes (A,B) of the articulating device and by determining from the measurement values the position vector $P_C$ pointing from the machine-coordinate system ($X_M$, $Y_M$, $Z_M$) to the articulating device coordinate system ($X_C$, $Y_C$, $Z_C$), and the angular offset $D_C$ of this coordinate system ($X_C$, $Y_C$, $Z_C$) as well as the coordinate $\overrightarrow{P_S}$ and radial dimension $\underline{r}$ of the probe as parameters in the coordinate system of the articulating head, determined values being fed to the computer of the coordinate-measuring machine; and

c) in subsequent measurement of unknown workpieces, each calculation of the actual position of the probe element takes into account the coordinate measurement values of the length measuring systems of the coordinate measuring machine, the installation-independent correction values determined by calibration, the installation-dependent parameters as determined and the instantaneous measurements values of the angle encoders of the articulating device.

8. A method according to claim 7, characterized by the fact that calculation of the actual position of the probe element is effected in accordance with the equation:

$$\overrightarrow{D} = \overrightarrow{P_C} + D_C \times [D_B \times (D_A \times \overrightarrow{P_S} + \overrightarrow{V_C})]$$

wherein the variables have the following meaning:

$\overrightarrow{P_S}$ describes the location of the probe element in the coordinate system of the articulating device,

$\overrightarrow{V_C}$ is the offset-distance vector by which the two axes of the articulating device fail to intersect,

$D_A$ is the rotational matrix which describes the measured angle of articulating rotation of the probe head about the swivel axis (A) of the articulating device,

$D_B$ is the rotational matrix which describes the measured angle of articulating rotation of the probe about the rotary axis (B) of the articulating device,

$D_C$ is the rotational matrix which describes the rotational orientation of the coordinate system of the articulating device in the coordinate system of the coordinate-measuring machine, and

$\overrightarrow{P_C}$ is the offset-location vector which describes the offset distance of the origin of the coordinate system of the articulating device in the machine-coordinate system.

## Revendications

1. Dispositif de rotation-basculement pour des têtes de palpage (31, 41) d'appareils de mesure de coordonnées, comportant au moins deux axes de rotation (A, B) pouvant être déplacés à l'aide d'un moteur et servant à aligner angulairement les têtes de palpage, et dans lequel le dispositif de rotation-basculement contient

des paliers tournants (9, 19) situés sur les axes (A, B);

des codeurs angulaires (10, 20) servant à signaler en retour l'angle réglé de rotation ou de basculement au calculateur (92) d'un appareil de mesure de coordonnées, et des circuits actifs de régulation de position, grâce auxquels le codeur angulaire (10, 20) et le dispositif d'entraînement (4, 14) de l'axe respectif (A, B) sont réunis à l'unité de commande de l'appareil de mesure de coordonnées,

caractérisé en ce

que les paliers rotatifs (9, 19) possèdent un comportement reproductible,

qu'au dispositif de pivotement-basculement sont associées des valeurs de correction, qui ont été obtenues lors d'une opération de calibrage et sont mémorisées dans le calculateur (92) de l'appareil de mesure de coordonnées, les valeurs de correction décrivant des écarts de position angulaire, la position réciproque de l'axe de rotation (B) et de l'axe de pivotement (A) et/ou des écarts de déplacement des axes (A, B), et

que la commande peut être exécutée de telle sorte qu'elle fixe dans l'espace, par l'intermédiaire du dispositif d'entraînement du dispositif de rotation-basculement, un alignement préréglé de la tête de palpage (31, 41) ou que la pièce à usiner (34) devant être mesurée est palpée, comme cela est désiré, uniquement à l'aide du dispositif de rotation-basculement, alors que les dispositifs d'entraînement linéaire de l'appareil de mesure de coordonnées sont arrêtés.

2. Dispositif de rotation-basculement selon la revendication 1, caractérisé par le fait que pour la transmission, sans force transversale, de la force d'entraînement des dispositifs d'entraînement (4, 14) aux parties tournantes (2, 12) du dispositif de rotation-basculement, il est prévu un dispositif d'entraînement à bande ou courroie (5, 15).

3. Dispositif de rotation-basculement selon la revendication 1, caractérisé en ce que les codeurs angulaires (10, 20) sont des systèmes de mesure absolue ou des systèmes de mesure incrémentale comportant au moins une marque de référence supplémentaire (111, 120).

4. Dispositif de rotation-basculement selon la revendication 1, caractérisé en ce que le dispositif de rotation-basculement possède un axe de rotation et un axe de basculement, l'axe de basculement (A) étant monté sur l'axe de rotation (B), et le logement (12, 27) servant à fixer la tête de palpage (31) sur le dispositif de rotation-basculement est monté de façon excentrée par rapport à l'axe de rotation (B), sur l'axe de basculement (A).

5. Procédé de mesure de coordonnées de pièces à usiner, comportant un appareil de mesure de coordonnées dont la tête de palpage est fixée sur un dispositif de rotation-basculement, caractérisé en ce que les points mesurés sur la pièce à usiner (34, 74, 134) sont palpés au moins partiellement, alors que les dispositifs d'entraînement linéaire de l'appareil de mesure de coordonnées (50) sont arrêtés, uniquement au moyen d'un déplacement angulaire de la tête de palpage (31, 131, 71) à l'aide du dispositif de rotation-basculement (2, 72), auquel cas, pour le contrôle de la forme de surfaces circulaires ou cylindriques (136, 137) au moyen d'une tête de palpage (131) effectuant la mesure et montée sur le dispositif de rotation-basculement (72), on positionne tout d'abord l'axe de rotation (B) du dispositif de rotation-basculement des dispositifs d'entraînement de l'appareil de mesure de coordonnées sur l'axe de symétrie (C) de la surface (136, 137), puis on explore la surface à contrôler au moyen du dispositif d'entraînement de basculement (A) du dispositif de rotation-basculement, et on réalise l'exploration de la surface circulaire ou cylindrique au moyen de l'entraînement de l'axe de rotation (B) du dispositif de rotation-basculement.

6. Procédé de mesure de coordonnées de pièces à usiner, comportant un appareil de mesure de coordonnées dont la tête de palpage est fixée sur un dispositif de rotation-basculement, caractérisé en ce que les points mesurés sur la pièce à usiner (34, 74, 134) sont palpés au moins partiellement, alors que les dispositifs d'entraînement linéaire de l'appareil de mesure de coordonnées (50) sont arrêtés, uniquement au moyen d'un déplacement angulaire de la tête de palpage (31, 131, 71) à l'aide du dispositif de rotation-basculement (2, 72), auquel cas, pour le contrôle de la forme de surfaces à symétrie circulaire ou cylindrique avec une tête de palpage effectuant la mesure et montée sur le dispositif de rotation-basculement, le dispositif de rotation-basculement est tout d'abord positionné de telle sorte que le point d'intersection de l'axe de rotation et de l'axe de basculement soit situé sur l'axe de symétrie de la surface, et ensuite on explore la surface à contrôler moyennant un déplacement simultané des deux axes du dispositif de rotation-basculement.

7. Procédé de mesure de coordonnées de pièces à usiner, comportant un appareil de mesure de coordonnées dont la tête de palpage est fixée sur un dispositif de rotation-basculement, caractérisé en ce que

a) des écarts de géométrie angulaire ou de déplacement, qui sont indépendants du montage, des axes du dispositif de rotation-basculement sont déterminés lors d'une opération de calibrage et sont envoyés, en tant que valeurs de correction au calculateur de l'appareil de mesure de coordonnées,

b) au dispositif de rotation-basculement est associé un système particulier de coordonnées, par le fait que, dans le cas de la tête de palpage appliquée contre le dispositif de rotation-basculement, un corps géométrique possédant des dimensions connues et une position connue dans le système de coordonnées de l'appareil de mesure de coordonnées est exploré pour plusieurs positions des axes (A, B) du dispositif de rotation-basculement et que le vecteur de lieu ($\overrightarrow{P_C}$) du système de coordonnées ($X_M$, $Y_M$, $Z_M$) de la machine par rapport au système de coordonnées ($X_C$, $Y_C$, $Z_C$) du dispositif de rotation-basculement est déterminé à partir des valeurs de mesure et que la position en rotation ($D_C$) de ce système de coordonnées ($X_C$, $Y_C$, $Z_C$) ainsi que la coordonnées ($\overrightarrow{P_S}$) et la dimension r de l'élément de passage dans le système de coordonnées du dispositif de rotation-basculement sont déterminées en tant que paramètres et sont également envoyées au calculateur de l'appareil de mesure de coordonnées,

c) lors de la mesure ultérieure de pièces à usiner inconnues, en dehors des valeurs de mesure des dispositifs de mesure de longueurs de l'appareil de mesure de coordonnées, on tient compte des valeurs de correction, qui sont obtenues lors du calibrage et sont indépendantes du montage, les paramètres déterminés, qui sont indépendants du montage, et les valeurs de mesure instantanées des codeurs du dispositif de rotatino-basculement pour le calcul de la position réelle de l'élément de palpage.

8. Procédé suivant la revendication 7, caractérisé en ce que le calcul de la position réelle de l'élément de palpage s'effectue conformément à la relation suivante

$$\vec{D} = \vec{P}_C + D_C \cdot [D_B \cdot (D_A \cdot \vec{P}_S + \vec{V}_C)$$

les grandeurs ayant la signification suivante :

$\vec{P}_S$ vecteur de lieu, qui décrit la position de l'élément de palpage dans le système de coordonnées du dispositif de rotation-basculement

$\vec{V}_C$ vecteur de la distance séparant les deux axes du dispositif de rotation-basculement

$D_A$ matrice de rotation, qui décrit la rotation de la tête de palpage autour de l'axe de basculement (A) du dispositif de rotation-basculement, et ce sur l'angle de basculement mesuré,

$D_B$ matrice de rotation qui décrit la rotation de la tête de palpage autour de l'axe de rotation (B) du dispositif de rotation-basculement, et ce sur l'angle de rotation mesuré,

$D_C$ matrice de rotation, qui décrit l'orientation du système de coordonnées du dispositif de rotation-basculement dans le système de coordonnées de machine de l'appareil de mesure de coordonnées, et

$\vec{P}_C$ vecteur de position, qui décrit la position du système de coordonnées du dispositif de rotation-basculement dans le système de coordonnées de la machine.

## Fig. 1

EP 0 317 967 B1

# Fig. 2

EP 0 317 967 B1

Fig.3

Fig.4

# Fig.5

Fig.6

# Fig.7

59
A
51
56
57
B
$V_c$
2
1
52
58

# Fig.8

A
55b
55a
53
55c
55d

53
54

# Fig.9

B

Fig.10

EP 0 317 967 B1

## Fig.11

## Fig.12